# EUROPEAN PATENT SPECIFICATION

(11) **EP 3 421 436 B1**
(45) Date of publication and mention of the grant of the patent: **01.04.2020**
(21) Application number: 18155347.0
(22) Date of filing: 06.02.2018
(51) Int. Cl.: C03C 3/064, C03C 8/08, C03C 8/16, F24C 7/02, F24C 7/04, F24C 14/00, F24C 15/00, C23D 5/00, C23C 4/11, C09D 1/04, C09D 1/00

(54) **GLASS COMPOSITION AND COOKING APPLIANCE**
GLASZUSAMMENSETZUNG UND KOCHGERÄT
COMPOSITION DE VERRE ET APPAREIL DE CUISSON

(30) Priority: 28.06.2017 KR 20170081642
(43) Date of publication of application: 02.01.2019
(73) Proprietor: LG Electronics Inc., Yeongdeungpo-gu Seoul 07336 (KR)
(72) Inventor: Kim, Taehee, 08592 Seoul (KR); Kim, Taeho, 08592 Seoul (KR); Seo, Dongwan, 08592 Seoul (KR); Lee, Yongsoo, 08592 Seoul (KR); Choi, Suyeon, 08592 Seoul (KR)
(74) Representative: Ter Meer Steinmeister & Partner

(56) References cited:
- EP-A1- 0 453 897
- DE-A1-102013 015 501
- US-A- 3 928 668
- US-A1- 2013 045 389

## Description

This application claims priority of Korean Patent Application No. 10-2017-0081642, filed on June 28, 2017.

### TECHNICAL FIELD

The present invention relates to a coating composition and a cooking appliance including the same.

### BACKGROUND

A coating composition (i.e., enamel) is a coating composition where a hyaline glaze is coated on a surface of a metal plate. General enamel is applied to cooking appliances such as microwave ovens and ovens. Enamel is categorized into an acid-resisting enamel preventing oxidation and a heat-resisting enamel capable of enduring a high temperature, based on the kind of glaze and usability. Also, enamel is categorized into an aluminium enamel, a zirconium enamel, titanium enamel, and a soda glass enamel, based on materials added to enamel.

Generally, cooking appliances are appliances which heat and cook food by using a heating source. Food residues occurring in a cooking process are attached on an inner wall of a cavity of the appliance, and thus, when cooking of food is completed in the cooking appliance, it is required to clean the inside of the cavity. Also, food is cooked at a high temperature, and the inner wall of the cavity is exposed to an organic material and an alkali component. Therefore, in a case where enamel is used in a cooking appliance, the enamel needs a thermal resistance, a chemical resistance, a wear resistance, a pollution resistance, etc. For this reason, a composition for enamel for improving the thermal resistance, chemical resistance, wear resistance, and pollution resistance of enamel is needed.

Enamel may be coated on one surface of a parent material configuring a cooking appliance. However, a composition and/or a composition ratio of the enamel may be changed for improving the thermal resistance, chemical resistance, wear resistance, and pollution resistance of the enamel, and due to the change in the composition and/or the composition ratio, an electrostatic performance of the enamel is reduced. That is, due to the reduction in the electrostatic performance of the enamel, a coating performance of the enamel is reduced, and thus, a performance of the enamel coated on the inside of a cooking appliance is reduced.

The documents US 2013/0045389 A1, EP 0 453 897 A1, DE 10 2013 015 501 A1 and US 3,928,668 B describe coating compositions comprising a glass frit and a polyorganosiloxane.

Therefore, it is required to develop a coating composition for solving the above-described problems.

### SUMMARY

Accordingly, the present invention provides a coating composition with an enhanced electrostatic performance and coating performance.

In one general aspect, a coating composition includes a glass frit and an electrostatic force reinforcing material including polymethylhydrogensiloxane derivatives, wherein the electrostatic force reinforcing material is represented by the following Formula. 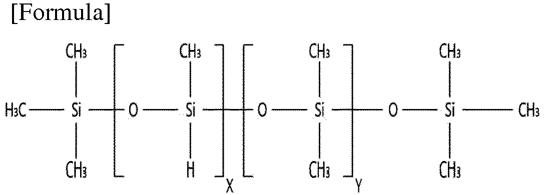 where X is within a range of 50≤X≤100, and Y is within a range of 10≤Y≤50.

X+Y is within a range of 100≤X+Y≤200.

Preferably, the coating composition may further comprise an additive reacting with the glass frit and the polymethylhydrogensiloxane derivatives.

Preferably, the additive may comprise amino silane.

Preferably, the amino silane may be added by 0.05wt% to 0.1wt% of the glass composition.

The glass frit is added by 99.6wt% to 99.85wt% of the glass composition.

The electrostatic force reinforcing material may be added by 0.1wt% to 0.3wt% of the glass composition.

Preferably, the glass frit may comprise P₂O₅, SiO₂, Group I oxide, Al₂O₃, B₂O₃, and ZrO₂.

Preferably, the glass frit may further comprise at least one of TiO₂, SnO, ZnO, CaO, MgO, BaO, NaF, CaF₂, AlF₃, Co₃O₄, NiO, Fe₂O₃ and MnO_{2.}

The object is also solved by a cooking appliance comprising a cavity, a cooking room being provided in the cavity; a door selectively opening or closing the cooking room; and at least one heating source providing heat for heating food cooked in the cooking room.

Preferably, at least one of the cavity and the door comprises a parent metal material and a function layer on the parent metal material.

Preferably, the function layer may comprise a glass composition as defined above.

Preferably, the function layer may be at least partly in direct physical contact with the parent metal material.

Preferably, at least one of the cavity and/or the door may further comprise a buffer layer between the function layer and the parent metal material.

Preferably, the buffer layer may include an adhesive layer.

Preferably, the function layer may be disposed on the surface of at least one of the cavity and the door.

Preferably, the function layer may be disposed on the surface of the cavity and/or the surface of the door.

Other features and aspects will be apparent from the following detailed description, the drawings, and the claims.

### BRIEF DESCRIPTION OF THE DRAWINGS

FIG. 1 is a front view of a cooking appliance according to an embodiment.
Fig.2, 3 are enlarged cross-sectional views of a portion of an inner side of a cavity of Fig.1.
FIGS. 4, 5 are enlarged cross-sectional views of a portion of a backside of a door of Fig. 1.
FIG. 6 is a cross-sectional view of a powder manufactured based on a coating composition according to an embodiment.

### DETAILED DESCRIPTION OF EMBODIMENTS

Hereinafter, a coating composition and a cooking appliance including the same according to embodiments will be described in detail with reference to the accompanying drawings.

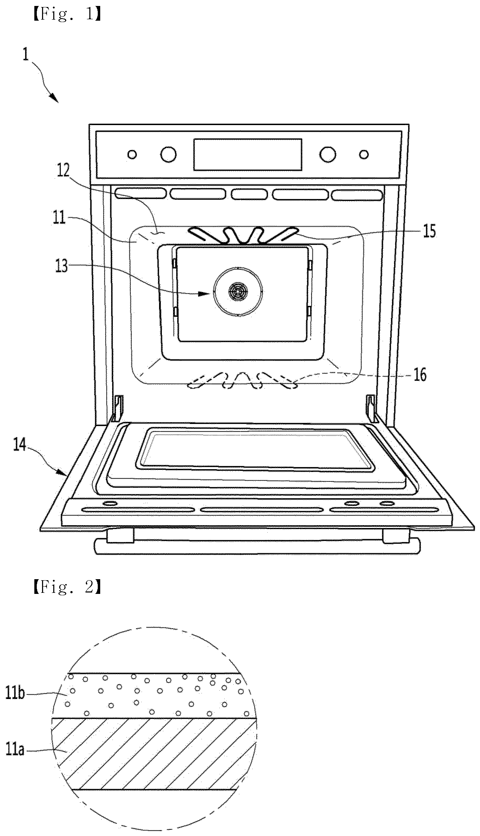

FIG. 1 is a front view of a cooking appliance 1 according to an embodiment.

Referring to FIG. 1, the cooking appliance 1 may include a cavity 11 where a cooking room 12 is provided, a door 14 which selectively opens or closes the cooking room 12, and at least one heating source which provides heat for heating food in the cooking room 12.

In detail, the cavity 11 may be provided in a hexahedral shape with a front surface opened. The heating source may include a convection assembly 13 which allows heated air to be discharged to the inside of the cavity 11, an upper heater 15 disposed on the cavity 11, and a lower heater 16 disposed under the cavity 11. The heating source may not include the convection assembly 13, the upper heater 15, and/or the lower heater 16. That is, the heating source may include at least one of the convection assembly 13, the upper heater 15, and the lower heater 16.

The upper heater 15 and the lower heater 16 may be provided inside or outside the cavity 11.

Referring to FIGS. 2 to 5, a function layer may be disposed on each of an inner side of the cavity 11 and a backside of the door 14. However, it might be also possible to dispose the function layer on parts of the inner side of the cavity 11 and/or on parts of the backside of the door 14.

The function layer may include a below-described coating composition. The function layer may be coated on each of the inner side of the cavity 11 and the backside of the door 14. That is, the function layer may be a coating layer.

The function layer enhances the thermal resistance, chemical resistance, and pollution resistance of each of the inner side of the cavity 11 and the backside of the door 14.

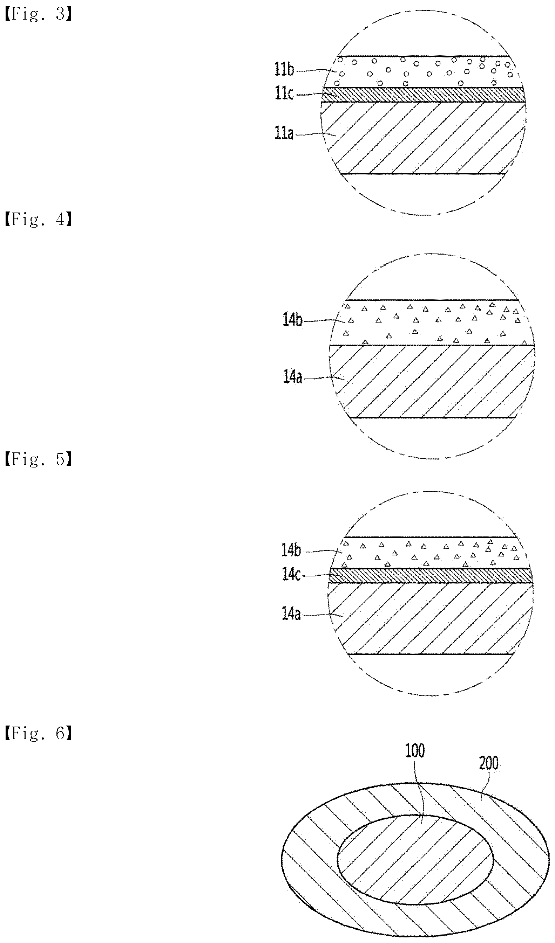

Referring to FIGS. 2 and 3, the function layer may be disposed in the cavity 11.

The cavity 11 may include a metal layer 11a and a function layer 11b on the metal layer 11a.

The metal layer 11a may be a parent material of the cavity.

Referring to FIG. 2, the function layer 11b may be disposed in direct contact with the metal layer 11a.

Alternatively, referring to FIG. 3, the function layer 11b may be disposed in indirect contact with the metal layer 11a. In detail, a buffer layer 11c may be disposed between the metal layer 11a and the function layer 11b. The buffer layer 11c may include an adhesive layer. That is, an adhesive force of the metal layer 11a and the function layer 11b is enhanced by the buffer layer 11c.

Referring to FIGS. 4 and 5, the function layer may be disposed on the backside of the door 14. In detail, in a state where the cooking room 12 is closed, the function layer may be disposed on the backside of the door 14 facing the cooking room 12. The function layer enhances the thermal resistance, chemical resistance, and pollution resistance of the backside of the door 14.

The door 14 may include a metal layer 14a and a function layer 14b on the metal layer 14a.

The metal layer 14a may be a parent material of the cavity 11.

Referring to FIG. 4, the function layer 14b may be disposed in direct contact with the metal layer 14a.

Alternatively, referring to FIG. 5, the function layer 14b may be disposed in indirect contact with the metal layer 14a. In detail, a buffer layer 14c may be disposed between the metal layer 14a and the function layer 14b. The buffer layer 14c may include an adhesive layer. That is, an adhesive force of the metal layer 14a and the function layer 14b is enhanced by the buffer layer 14c.

The function layer may be formed by coating the coating composition on the inner side of the cavity 11 or the backside of the door 14. In detail, the function layer may be coated on the inner side of the cavity 11 or the backside of the door 14, thereby enhancing the thermal resistance, chemical resistance, and pollution resistance of each of the inner side of the cavity 11 and the backside of the door 14.

Hereinafter, a coating composition coated on a cavity and a door of the cooking appliance will be described.

A coating composition according to an embodiment may include a glass frit and an electrostatic force reinforcing material.

The glass frit may include P₂O₅, SiO₂, Group I oxide, Al₂O₃, B₂O₃, ZrO₂, and other materials.

P₂O₅ may be added by about 50wt% or less of the glass frit. In detail, P₂O₅ may be added by about 20wt% to about 50wt% of the glass frit.

P₂O₅ may be included in the coating composition, and a cleaning performance of the coating composition is enhanced. If P₂O₅ is added by less than about 20wt% of the glass composition, the cleaning performance of the glass composition is reduced. Also, if P₂O₅ is added by more than about 50wt% of the glass frit, a thermal characteristic of the coating composition is reduced, and a vitrification of the coating composition is weakened.

SiO₂ may be added by about 10wt% or less of the glass frit. In detail, SiO₂ may be added by about 0.1wt% to about 10wt% of the glass frit.

SiO₂ may be included in the coating composition and may form a glass structure of the coating composition, thereby enhancing a frame of the glass structure and enhancing an acid resistance of the glass frit.

If SiO₂ is added by less than about 0.1wt% of the glass frit, the glass structure of the coating composition is degraded, causing a reduction in durability of the function layer. Also, SiO₂ is added by more than about 10wt% of the glass frit, a cleaning performance of the glass frit is reduced.

The Group I oxide may include at least one metal oxide of Li₂O, Na₂O, and K₂O. In detail, the Group I oxide may include Li₂O, Na₂O, and K₂O. That is, the glass frit may include all of Li₂O, Na₂O, and K₂O.

The Group I oxide may be added by about 12wt% to about 38wt% of the glass frit.

In detail, Li₂O may be added by about 0.1wt% to about 3wt% of the glass frit.

Moreover, Na₂O may be added by about 10wt% to about 25wt% of the glass frit.

Moreover, K₂O may be added by about 0.1wt% to about 10wt% of the glass frit.

The Group I oxide may be included in the coating composition, thereby enhancing the cleaning performance of the glass composition. That is, the Group I oxide enhances the cleaning performance of the coating composition along with P₂O₅.

If the Group I oxide is added by less than about 12wt% of the glass frit, the cleaning performance of the coating composition is reduced. Also, if Group I oxide is added by more than about 38wt% of the glass frit, a thermal characteristic of the coating composition is reduced.

P₂O₅, Li₂O, Na₂O, and K₂O may form an alkali phosphate glass structure. Also, P₂O₅, Li₂O, Na₂O, and K₂O may provide an enhanced cleaning performance to the coating composition according to an embodiment.

That is, since the glass frit includes P₂O₅, Li₂O, Na₂O, and K₂O, when the function layer formed by the coating composition according to an embodiment is polluted by food and/or the like, the function layer may be easily cleaned with water.

Al₂O₃ may be added by about 25wt% or less of the glass frit. In detail, Al₂O₃ may be added by about 10wt% to about 25wt% of the glass frit.

If Al₂O₃ is added by less than about 10wt% of the glass frit, the chemical resistance and durability of the coating composition are reduced. Also, if Al₂O₃ is added by more than about 25wt% of the glass frit, the cleaning performance of the coating composition is reduced.

B₂O₃ may be added by about 5wt% or less of the glass frit. In detail, B₂O₃ may be added by about 0.1wt% to about 5wt% of the glass frit.

B₂O₃ may enlarge a vitrification region of the glass frit, and a function of appropriately adjusting a thermal expansion coefficient of the coating composition according to an embodiment may be performed.

If B₂O₃ is added by less than about 0.1wt% of the glass frit, the vitrification region is narrowed, and for this reason, the glass structure is reduced, causing a reduction in durability of the function layer. Also, if B₂O₃ is added by more than about 5wt% of the glass frit, the cleaning performance of the glass frit is reduced.

ZrO₂ may be added by about 5wt% or less of the glass frit. In detail, ZrO₂ may be added by about 0.1wt% to about 5wt% of the glass frit.

If ZrO₂ is added by less than about 0.1wt% of the glass frit, the chemical resistance and durability of the coating composition are reduced. Also, if ZrO₂ is added by more than about 5wt% of the glass frit, the cleaning performance of the coating composition is reduced.

ZrO₂ enhances the chemical durability of the glass frit. Particularly, ZrO₂ supplements, through structural stabilization, a low chemical durability of the alkali phosphate glass structure including P₂O₅, Li₂O, Na₂O, and K₂O.

The glass frit may further include an additional material in addition to the materials, based on usability.

For example, the glass frit may further include at least one of TiO₂, SnO, ZnO, CaO, MgO, BaO, NaF, CaF₂, AlF₃, Co₃O₄, NiO, Fe₂O₃, and MnO₂.

The additional material may be added by about 0.1wt% to about 4wt% of the glass frit.

The additional material may be associated with performances such as surface tension control, obliterating force, and adhesive force of the coating composition.

The above-described composition and composition ratio of the glass frit may be variously changed based on the usability of a glass power manufactured by the glass frit. That is, the composition and the composition ratio of the glass frit of the coating composition according to an embodiment are not limited to the above-described composition and composition ratio.

The electrostatic force reinforcing material may be mixed with the glass frit. The electrostatic force reinforcing material may react with the glass frit. The electrostatic force reinforcing material may be bonded to the glass frit. The electrostatic force reinforcing material may be chemically bonded to the glass frit.

The glass frit may be added by about 99wt% or more of the coating composition. In detail, the glass frit may be added by about 99wt% to about 99.85wt% of the coating composition. In more detail, the glass frit may be added by about 99.6wt% to about 99.85wt% of the coating composition.

If the glass frit is added by less than about 99.6wt% of the coating composition, functions such as the thermal resistance, chemical resistance, wear resistance, and pollution resistance of the glass composition are reduced. That is, a content of the glass frit for realizing the functions such as the thermal resistance, chemical resistance, wear resistance, and pollution resistance of the glass composition may be reduced, and thus, the thermal resistance, chemical resistance, wear resistance, and pollution resistance of the glass composition are reduced.

Moreover, if the glass frit is added by more than about 99.85wt% of the coating composition, a coating performance and an electrostatic performance realized by a material in addition to the glass frit are reduced.

Moreover, the electrostatic force reinforcing material may be added by about 0.1wt% or more of the glass composition. In detail, the electrostatic force reinforcing material may be added by about 0.1wt% to about 0.3wt% of the glass composition.

If the electrostatic force reinforcing material is added by less than about 0.1wt% of the coating composition, an electrostatic performance and a coating performance realized by the electrostatic force reinforcing material are reduced. Also, if the electrostatic force reinforcing material is added by more than about 0.3wt% of the glass composition, a content of the glass frit in the coating composition may be reduced, and thus, the thermal resistance, chemical resistance, wear resistance, and pollution resistance of the glass composition are reduced.

The electrostatic force reinforcing material may be a hydrogenmethylsiloxane group, a dimethylsiloxane group, and a trimethylsiloxane group. For example, the electrostatic force reinforcing material may have a structure which is closed by the hydrogenmethylsiloxane group, the dimethylsiloxane group, and the trimethylsiloxane group.

The electrostatic force reinforcing material may include polymethylhydrogensiloxane derivatives. The electrostatic force reinforcing material may be represented by the following Formula 1.

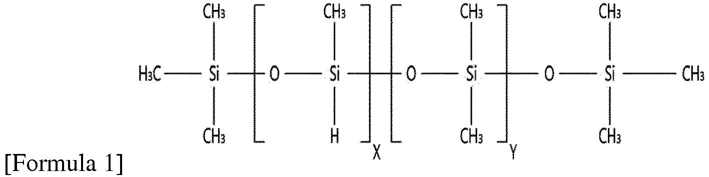

In detail, the electrostatic force reinforcing material may have a structure where the trimethylsiloxane group is bonded to each of both ends of the electrostatic force reinforcing material, and the hydrogenmethylsiloxane group and the dimethylsiloxane group are repeatedly bonded.

A repeating number X of the hydrogenmethylsiloxane group may differ from a repeating number Y of the dimethylsiloxane group. Alternatively, the repeating number X of the hydrogenmethylsiloxane group may be the same as the repeating number Y of the dimethylsiloxane group. In detail, the repeating number X of the hydrogenmethylsiloxane group may be greater than, the same as, or different from the repeating number Y of the dimethylsiloxane group.

The repeating number X of the hydrogenmethylsiloxane group is 50 to 100. When the repeating number X of the hydrogenmethylsiloxane group is less than 50 or more than 100, the coating performance and/or electrostatic performance of the coating composition are/is reduced.

Moreover, the repeating number Y of the dimethylsiloxane group is 10 to 50. When the repeating number Y of the dimethylsiloxane group is less than 10 or more than 50, the coating performance and/or electrostatic performance of the coating composition are/is reduced.

Moreover, a total repeating number "X+Y" of the hydrogenmethylsiloxane group and the dimethylsiloxane group is 100 to 200. When the total repeating number "X+Y" of the hydrogenmethylsiloxane group and the dimethylsiloxane group is less than 100, the coating performance and/or electrostatic performance of the coating composition are/is reduced. Also, when the total repeating number "X+Y" of the hydrogenmethylsiloxane group and the dimethylsiloxane group is more than 200, the stability of the polymethylhydrogensiloxane derivatives is reduced, causing a reduction in stability of the electrostatic force reinforcing material.

The glass frit and the electrostatic force reinforcing material may be chemically bonded to each other. For example, the glass frit and the electrostatic force reinforcing material may be chemically bonded to each other in a structure where the electrostatic force reinforcing material surrounds an outer side of the glass frit.

Referring to FIG. 6, for example, a glass powder manufactured by the coating composition may be formed in a structure where the electrostatic force reinforcing material 200 is coated on an outer side of the glass frit powder 100. That is, the electrostatic force reinforcing material may be an outer layer which is disposed to surround an outer side of the glass frit powder.

The coating composition may further include an additive. In detail, the coating composition may include an additive for realizing or promoting a reaction of the glass frit and the electrostatic force reinforcing material. That is, the additive may induce a bonding of the glass frit and the electrostatic force reinforcing material.

For example, the coating composition may further include an additive including amino silane. The amino silane may react with a functional group of the glass frit and may be bonded to the glass frit, thereby chemically bonding the coating composition to the electrostatic force reinforcing material.

In detail, the amino silane may include an amino group and an alkoxy group which includes a methoxy group and an ethoxy group. The amino group may react with a hydrogen group of the electrostatic force reinforcing material, and the alkoxy group may react with a hydroxy group of the glass frit. Therefore, the glass frit and the electrostatic force reinforcing material may be chemically bonded to each other by using the amino silane.

The additive may be added by about 0.05wt% of the coating composition. In detail, the additive may be added by about 0.05wt% to about 0.1wt% of the coating composition.

If the additive is added by less than about 0.05wt% of the coating composition, a bonding force between the glass frit and the electrostatic force reinforcing material is reduced. Also, if the additive is added by less than about 0.1wt% of the glass composition, the coating performance, electrostatic performance, thermal resistance, chemical resistance, wear resistance, and pollution resistance of the coating composition realized by the glass frit and the electrostatic force reinforcing material are reduced.

The glass composition may further include an alumina powder. The alumina powder may decrease an agglutination of unit powders where the glass frit and the electrostatic force reinforcing material are bonded to each other. In detail, the alumina powder prevents the unit powders from contacting each other or agglutinating between the unit powders.

The alumina powder may not be an essential component of the coating composition according to an embodiment, but may be omitted.

Hereinafter, the present invention will be described in more detail with reference to a coating composition manufacturing method according to embodiments and comparative examples. Such embodiments are merely described as an example for describing the present invention in more detail. Therefore, the present invention is not limited to the embodiments.

### Manufacturing of coating composition

As shown in the following Table 1, a glass frit material may be manufactured.

In this case, a raw material of P₂O₅ may use NH₄H₂PO₄, raw materials of Na₂O, K₂O, and Li₂O may respectively use Na₂CO₃, K₂CO₃, and Li₂CO₃, and the other component may use materials shown in the following Table 1.

Subsequently, the glass frit materials may be mixed, subsequently melted for about one hour to about two hours at a temperature of about 1,400 degrees C, and then rapidly cooled in a quenching roller, thereby obtaining a glass cullet.

Subsequently, organicpolysiloxane of about 0.1wt% to about 1wt% may be added to the glass cullet, milled for about four hours to about six hours by using a ball mill, and sieved to have a grain diameter of about 45*µ*m or less by using a mesh sieve 325, thereby forming the glass frit.

In this case, a glass frit milling process based on the ball mill process may be performed at a room temperature. In the milling process, amino silane and polymethylhydrogensiloxane derivatives represented by the following Formula may be added, and the glass frit and the polymethylhydrogensiloxane may be mixed, thereby manufacturing a final coating composition.

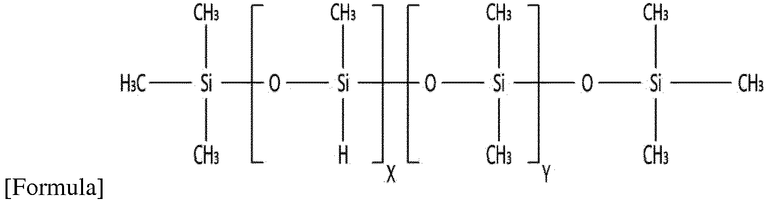

**[Table 1]**

| Composition | wt% |
|---|---|
| P₂O₅ | 40 |
| Al₂O₃ | 18 |
| Na₂O | 12 |
| K₂O | 7 |
| Li₂O | 7 |
| SiO₂ | 3 |
| B₂O₃ | 3 |
| ZrO₂ | 3 |
| Other | 3 |

Subsequently, an electrostatic performance and a coating performance have been measured based on a ratio of the glass frit, the polymethylhydrogensiloxane, and the amino silane.

In the electrostatic performance, a resistivity value of a function layer has been measured.

In the Formula of the polymethylhydrogensiloxane, X is 60, and Y is 30.

### Embodiment 1

In Table 1, the glass frit is added by 99.84wt% of the coating composition, the polymethylhydrogensiloxane is added by 0.1wt% of the glass composition, and the amino silane is added by 0.06wt% of the coating composition.

Subsequently, by using a corona discharge gun, the coating composition is sprayed on a low-carbon steel sheet having an area of 200x200mm and a thickness of 1mm or less. A voltage of the corona discharge gun is controlled to a condition of 40 kV to 100 kV, and the amount of the coating composition sprayed on the low-carbon steel sheet is 300 g/m².

Subsequently, the low-carbon steel sheet with the coating composition sprayed thereon is fired for 300 seconds to 450 seconds at a temperature of 830 degrees C to 870 degrees C, thereby forming a function layer on one surface of the low-carbon steel sheet.

Subsequently, the electrostatic performance and coating performance of the function layer have been measured.

In this case, a resistance of a glass powder manufactured by the coating composition has been measured. In the coating performance, an adhesive force of the glass composition manufactured by the glass powder has been measured.

The adhesive force of the function layer has been measured until a glass frit powder is sprayed on a parent material and is loaded into a firing furnace.

In detail, a glass composition layer is formed by spray-coating the glass frit powder, and then, an impact is applied to the glass composition layer. Subsequently, by measuring a ratio of a before-impact glass frit powder to an after-impact glass frit powder of the coating composition layer, the adhesive force of the function layer has been measured.

### Embodiment 2

Except that a coating composition is manufactured based on a condition where the glass frit of Table 1 is added by 99.79wt% of the coating composition, the polymethylhydrogensiloxane is added by 0.15wt% of the coating composition, and the amino silane is added by 0.06wt% of the glass composition, a function layer is formed identically to the coating composition of the embodiment 1, and then, the electrostatic performance and coating performance of the function layer have been measured.

### Embodiment 3

Except that a coating composition is manufactured based on a condition where the glass frit of Table 1 is added by 99.74wt% of the coating composition, the polymethylhydrogensiloxane is added by 0.2wt% of the coating composition, and the amino silane is added by 0.06wt% of the coating composition, a function layer is formed identically to the coating composition of the embodiment 1, and then, the electrostatic performance and coating performance of the function layer have been measured.

### Embodiment 4

Except that a coating composition is manufactured based on a condition where the glass frit of Table 1 is added by 99.69wt% of the coating composition, the polymethylhydrogensiloxane is added by 0.25wt% of the coating composition, and the amino silane is added by 0.06wt% of the coating composition, a function layer is formed identically to the coating composition of the embodiment 1, and then, the electrostatic performance and coating performance of the function layer have been measured.

### Embodiment 5

Except that a coating composition is manufactured based on a condition where the glass frit of Table 1 is added by 99.64wt% of the coating composition, the polymethylhydrogensiloxane is added by 0.3wt% of the coating composition, and the amino silane is added by 0.06wt% of the coating composition, a function layer is formed identically to the coating composition of the embodiment 1, and then, the electrostatic performance and coating performance of the function layer have been measured.

### Comparative Example 1

Except that a coating composition is manufactured based on a condition where the glass frit of Table 1 is added by 99.944wt% of the coating composition and the amino silane is added by 0.06wt% of the coating composition, a function layer is formed identically to the coating composition of the embodiment 1, and then, the electrostatic performance and coating performance of the function layer have been measured.

### Comparative Example 2

Except that a coating composition is manufactured based on a condition where the glass frit of Table 1 is added by 99.89wt% of the coating composition, the polymethylhydrogensiloxane is added by 0.05wt% of the coating composition, and the amino silane is added by 0.06wt% of the coating composition, a function layer is formed identically to the coating composition of the embodiment 1, and then, the electrostatic performance and coating performance of the function layer have been measured.

### Comparative Example 3

Except that a coating composition is manufactured based on a condition where the glass frit of Table 1 is added by 99.59wt% of the coating composition, the polymethylhydrogensiloxane is added by 0.35wt% of the coating composition, and the amino silane is added by 0.06wt% of the coating composition, a function layer is formed identically to the glass composition of the embodiment 1, and then, the electrostatic performance and coating performance of the function layer have been measured.

**[Table 2]**

| | Electrostatic Performance (*10¹³Ωm) | Coating Performance (ratio of after-impact glass composition to before-impact glass composition) |
|---|---|---|
| Embodiment 1 | 1.3 | 20 |
| Embodiment 2 | 2.3 | 20 |
| Embodiment 3 | 6.5 | 60 |
| Embodiment 4 | 5.9 | 60 |
| Embodiment 5 | 3.0 | 50 |
| Comparative Example 1 | 0.0 1 or less | 0 |
| Comparative Example 2 | 1.1 | 10 |
| Comparative Example 3 | 0.9 | 10 |

Referring to Table 2, it can be seen that the electrostatic performance and coating performance of a function layer manufactured by a coating composition of each of the embodiments 1 to 5 are more enhanced than the electrostatic performance and coating performance of a function layer manufactured by a coating composition of each of the comparative examples 1 to 3.

### Embodiment 6

A coating composition is manufactured based on a condition where the glass frit of Table 1 is added by 99.75wt% of the coating composition, the polymethylhydrogensiloxane is added by 0.2wt% of the coating composition, and the amino silane is added by 0.05wt% of the coating composition.

Subsequently, by using the corona discharge gun, the coating composition is sprayed on a low-carbon steel sheet having an area of 200x200mm and a thickness of 1mm or less. A voltage of the corona discharge gun is controlled to a condition of 40 kV to 100 kV, and the amount of the glass composition sprayed on the low-carbon steel sheet is 300 g/m².

Subsequently, the low-carbon steel sheet with the glass composition sprayed thereon is fired for 300 seconds to 450 seconds at a temperature of 830 degrees C to 870 degrees C, thereby forming a function layer on one surface of the low-carbon steel sheet.

Subsequently, the electrostatic performance and coating performance of the function layer have been measured.

### Embodiment 7

Except that a coating composition is manufactured based on a condition where the glass frit of Table 1 is added by 99.725wt% of the coating composition, the polymethylhydrogensiloxane is added by 0.2wt% of the coating composition, and the amino silane is added by 0.075wt% of the coating composition, a function layer is formed identically to the coating composition of the embodiment 6, and then, the electrostatic performance and coating performance of the function layer have been measured.

### Embodiment 8

Except that a coating composition is manufactured based on a condition where the glass frit of Table 1 is added by 99.7wt% of the coating composition, the polymethylhydrogensiloxane is added by 0.2wt% of the coating composition, and the amino silane is added by 0.1wt% of the coating composition, a function layer is formed identically to the coating composition of the embodiment 6, and then, the electrostatic performance and coating performance of the function layer have been measured.

### Comparative Example 4

Except that a coating composition is manufactured based on a condition where the glass frit of Table 1 is added by 99.8wt% of the coating composition and the polymethylhydrogensiloxane is added by 0.2wt% of the coating composition, a function layer is formed identically to the coating composition of the embodiment 6, and then, the electrostatic performance and coating performance of the function layer have been measured.

### Comparative Example 5

Except that a coating composition is manufactured based on a condition where the glass frit of Table 1 is added by 99.775wt% of the coating composition, the polymethylhydrogensiloxane is added by 0.2wt% of the coating composition, and the amino silane is added by 0.025wt% of the coating composition, a function layer is formed identically to the coating composition of the embodiment 6, and then, the electrostatic performance and coating performance of the function layer have been measured.

### Comparative Example 6

Except that a coating composition is manufactured based on a condition where the glass frit of Table 1 is added by 99.675wt% of the coating composition, the polymethylhydrogensiloxane is added by 0.2wt% of the coating composition, and the amino silane is added by 0.125wt% of the coating composition, a function layer is formed identically to the coating composition of the embodiment 6, and then, the electrostatic performance and coating performance of the function layer have been measured.

**[Table 3]**

| | Electrostatic Performance (*10¹³Ωm) | Coating Performance (ratio of after-impact glass composition to before-impact glass composition) |
|---|---|---|
| Embodiment 6 | 5.9 | 55 |
| Embodiment 7 | 6.5 | 60 |
| Embodiment 8 | 2.3 | 20 |
| Comparative Example 4 | 0.01 or less | 0 |
| Comparative Example 5 | 1.3 | 10 |
| Comparative Example 6 | 1.8 | 10 |

Referring to Table 3, it can be seen that the electrostatic performance and coating performance of a function layer manufactured by a glass composition of each of the embodiments 6 to 8 are more enhanced than the electrostatic performance and coating performance of a function layer manufactured by a coating composition of each of the comparative examples 4 to 6.

Subsequently, the electrostatic performance and coating performance of a function layer based on a repeating number Y of the dimethylsiloxane group and a repeating number X of the hydrogenmethylsiloxane group of the polymethylhydrogensiloxane derivatives have been measured.

### Embodiment 9

A function layer is formed identically to the coating composition of the embodiment 7, and then, the electrostatic performance and coating performance of the function layer have been measured.

In this case, in the polymethylhydrogensiloxane derivatives, the repeating number X of the hydrogenmethylsiloxane group is 60, and the repeating number Y of the dimethylsiloxane group is 30.

### Embodiment 10

Except that in the polymethylhydrogensiloxane derivatives, the repeating number X of the hydrogenmethylsiloxane group is 80, and the repeating number Y of the dimethylsiloxane group is 30, a function layer is formed identically to the coating composition of the embodiment 9, and then, the electrostatic performance and coating performance of the function layer have been measured.

### Embodiment 11

Except that in the polymethylhydrogensiloxane derivatives, the repeating number X of the hydrogenmethylsiloxane group is 90, and the repeating number Y of the dimethylsiloxane group is 30, a function layer is formed identically to the coating composition of the embodiment 9, and then, the electrostatic performance and coating performance of the function layer have been measured.

### Embodiment 12

Except that in the polymethylhydrogensiloxane derivatives, the repeating number X of the hydrogenmethylsiloxane group is 100, and the repeating number Y of the dimethylsiloxane group is 30, a function layer is formed identically to the coating composition of the embodiment 9, and then, the electrostatic performance and coating performance of the function layer have been measured.

### Embodiment 13

Except that in the polymethylhydrogensiloxane derivatives, the repeating number X of the hydrogenmethylsiloxane group is 60, and the repeating number Y of the dimethylsiloxane group is 40, a function layer is formed identically to the coating composition of the embodiment 9, and then, the electrostatic performance and coating performance of the function layer have been measured.

### Embodiment 14

Except that in the polymethylhydrogensiloxane derivatives, the repeating number X of the hydrogenmethylsiloxane group is 90, and the repeating number Y of the dimethylsiloxane group is 40, a function layer is formed identically to the coating composition of the embodiment 9, and then, the electrostatic performance and coating performance of the function layer have been measured.

### Comparative Example 7

Except that in the polymethylhydrogensiloxane derivatives, the repeating number X of the hydrogenmethylsiloxane group is 20, and the repeating number Y of the dimethylsiloxane group is 0, a function layer is formed identically to the coating composition of the embodiment 9, and then, the electrostatic performance and coating performance of the function layer have been measured.

### Comparative Example 8

Except that in the polymethylhydrogensiloxane derivatives, the repeating number X of the hydrogenmethylsiloxane group is 40, and the repeating number Y of the dimethylsiloxane group is 0, a function layer is formed identically to the coating composition of the embodiment 9, and then, the electrostatic performance and coating performance of the function layer have been measured.

### Comparative Example 9

Except that in the polymethylhydrogensiloxane derivatives, the repeating number X of the hydrogenmethylsiloxane group is 60, and the repeating number Y of the dimethylsiloxane group is 0, a function layer is formed identically to the coating composition of the embodiment 9, and then, the electrostatic performance and coating performance of the function layer have been measured.

### Comparative Example 10

Except that in the polymethylhydrogensiloxane derivatives, the repeating number X of the hydrogenmethylsiloxane group is 90, and the repeating number Y of the dimethylsiloxane group is 0, a function layer is formed identically to the coating composition of the embodiment 9, and then, the electrostatic performance and coating performance of the function layer have been measured.

### Comparative Example 11

Except that in the polymethylhydrogensiloxane derivatives, the repeating number X of the hydrogenmethylsiloxane group is 60, and the repeating number Y of the dimethylsiloxane group is 4, a function layer is formed identically to the coating composition of the embodiment 9, and then, the electrostatic performance and coating performance of the function layer have been measured.

### Comparative Example 12

Except that in the polymethylhydrogensiloxane derivatives, the repeating number X of the hydrogenmethylsiloxane group is 75, and the repeating number Y of the dimethylsiloxane group is 4, a function layer is formed identically to the coating composition of the embodiment 9, and then, the electrostatic performance and coating performance of the function layer have been measured.

### Comparative Example 13

Except that in the polymethylhydrogensiloxane derivatives, the repeating number X of the hydrogenmethylsiloxane group is 90, and the repeating number Y of the dimethylsiloxane group is 10, a function layer is formed identically to the coating composition of the embodiment 9, and then, the electrostatic performance and coating performance of the function layer have been measured.

### Comparative Example 14

Except that in the polymethylhydrogensiloxane derivatives, the repeating number X of the hydrogenmethylsiloxane group is 120, and the repeating number Y of the dimethylsiloxane group is 0, a function layer is formed identically to the coating composition of the embodiment 9, and then, the electrostatic performance and coating performance of the function layer have been measured.

### Comparative Example 15

Except that in the polymethylhydrogensiloxane derivatives, the repeating number X of the hydrogenmethylsiloxane group is 160, and the repeating number Y of the dimethylsiloxane group is 0, a function layer is formed identically to the coating composition of the embodiment 9, and then, the electrostatic performance and coating performance of the function layer have been measured.

### Comparative Example 16

Except that in the polymethylhydrogensiloxane derivatives, the repeating number X of the hydrogenmethylsiloxane group is 30, and the repeating number Y of the dimethylsiloxane group is 30, a function layer is formed identically to the coating composition of the embodiment 9, and then, the electrostatic performance and coating performance of the function layer have been measured.

### Comparative Example 17

Except that in the polymethylhydrogensiloxane derivatives, the repeating number X of the hydrogenmethylsiloxane group is 120, and the repeating number Y of the dimethylsiloxane group is 30, a function layer is formed identically to the coating composition of the embodiment 9, and then, the electrostatic performance and coating performance of the function layer have been measured.

### Comparative Example 18

Except that in the polymethylhydrogensiloxane derivatives, the repeating number X of the hydrogenmethylsiloxane group is 160, and the repeating number Y of the dimethylsiloxane group is 30, a function layer is formed identically to the coating composition of the embodiment 9, and then, the electrostatic performance and coating performance of the function layer have been measured.

### Comparative Example 19

Except that in the polymethylhydrogensiloxane derivatives, the repeating number X of the hydrogenmethylsiloxane group is less than 50, and the repeating number Y of the dimethylsiloxane group is more than 50, a function layer is formed identically to the coating composition of the embodiment 9, and then, the electrostatic performance and coating performance of the function layer have been measured.

### Comparative Example 20

Except that in the polymethylhydrogensiloxane derivatives, the repeating number X of the hydrogenmethylsiloxane group is 60, and the repeating number Y of the dimethylsiloxane group is 60, a function layer is formed identically to the coating composition of the embodiment 9, and then, the electrostatic performance and coating performance of the function layer have been measured.

### Comparative Example 21

Except that in the polymethylhydrogensiloxane derivatives, the repeating number X of the hydrogenmethylsiloxane group is 80, and the repeating number Y of the dimethylsiloxane group is 50, a function layer is formed identically to the coating composition of the embodiment 9, and then, the electrostatic performance and coating performance of the function layer have been measured.

### Comparative Example 22

Except that in the polymethylhydrogensiloxane derivatives, the repeating number X of the hydrogenmethylsiloxane group is 60, and the repeating number Y of the dimethylsiloxane group is 120, a function layer is formed identically to the coating composition of the embodiment 9, and then, the electrostatic performance and coating performance of the function layer have been measured.

### Comparative Example 23

Except that in the polymethylhydrogensiloxane derivatives, the repeating number X of the hydrogenmethylsiloxane group is 60, and the repeating number Y of the dimethylsiloxane group is 180, a function layer is formed identically to the coating composition of the embodiment 9, and then, the electrostatic performance and coating performance of the function layer have been measured.

### Comparative Example 24

Except that in the polymethylhydrogensiloxane derivatives, the repeating number X of the hydrogenmethylsiloxane group is 120, and the repeating number Y of the dimethylsiloxane group is 50, a function layer is formed identically to the coating composition of the embodiment 9, and then, the electrostatic performance and coating performance of the function layer have been measured.

**[Table 4]**

| | Electrostatic Performance (*10¹³Ωm) | Coating Performance (ratio of after-impact glass composition to before-impact glass composition) |
|---|---|---|
| Embodiment 9 | 5.5 | 55 |
| Embodiment 10 | 6 | 60 |
| Embodiment 11 | 6.5 | 60 |
| Embodiment 12 | 5.5 | 55 |
| Embodiment 13 | 4.5 | 40 |
| Embodiment 14 | 7.1 | 60 |
| Comparative Example 7 | 0.5 | 5 |
| Comparative Example 8 | 2.1 | 10 |
| Comparative Example 9 | 3.5 | 10 |
| Comparative Example 10 | 4.5 | 30 |
| Comparative Example 11 | 3.5 | 20 |
| Comparative Example 12 | 4.2 | 30 |
| Comparative Example 13 | 4.5 | 35 |
| Comparative Example 14 | 2.2 | 10 |
| Comparative Example 15 | 1.5 | 10 |
| Comparative Example 16 | 2.5 | 10 |
| Comparative Example 17 | 2.0 | 10 |
| Comparative Example 18 | 1.3 | 10 |
| Comparative Example 19 | X | X |
| Comparative Example 20 | 2.8 | 15 |
| Comparative Example 21 | 5.7 | 45 |
| Comparative Example 22 | 2.5 | 15 |
| Comparative Example 23 | 2.5 | 15 |
| Comparative Example 24 | X | X |

Referring to Table 4, it can be seen that the electrostatic performance and coating performance of a function layer manufactured by a coating composition of each of the embodiments 9 to 14 are more enhanced than the electrostatic performance and coating performance of a function layer manufactured by a coating composition of each of the comparative examples 7 to 24.

As described above, the coating composition according to the embodiments has an enhanced electrostatic performance and coating performance.

Therefore, when the coating composition according to the embodiments is applied as a function layer of the cooking appliance, a reliability of the function layer is enhanced.

That is, the function layer manufactured based on the coating composition according to the embodiments has an enhanced electrostatic performance, and thus, a coating performance is prevented from being reduced due to a recovery powder in coating.

That is, recovery powders can occur when a glass powder including the coating composition is being spray-coated by using the corona discharge gun. In this case, since the glass powder including the glass composition according to the embodiments has an enhanced electrostatic performance, the electrostatic performance is prevented from being reduced in spray-coating, and thus, despite mixing of recovery powders, a function layer with an enhanced coating performance is formed.

Accordingly, the function layer manufactured by the glass powder including the coating composition according to the embodiments has an enhanced coating performance.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A coating composition comprising:
a glass frit; and
an electrostatic force reinforcing material (200) including polymethylhydrogensiloxane derivatives,
wherein the glass frit is added by 99.6wt% to 99.85wt% of the glass composition, and
the electrostatic force reinforcing material (200) is added by 0.1wt% to 0.3wt% of the glass composition,
wherein the electrostatic force reinforcing material is represented by Formula below: 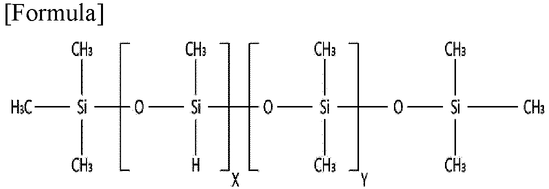 where 50≤X≤100, and 10≤Y≤50, and wherein X+Y is within a range of 100≤X+Y≤200.

2. The coating composition of claim 1, further comprising: an additive reacting with the glass frit and the polymethylhydrogensiloxane derivatives.

3. The coating composition of claim 2, wherein the additive comprises amino silane.

4. The coating composition of claim 3, wherein the amino silane is added by 0.05wt% to 0.1wt% of the coating composition.

5. The coating composition of claim 1, wherein the glass frit comprises P₂O₅, SiO₂, Group I oxide, Al₂O₃, B₂O₃, and ZrO₂.

6. The coating composition of claim 5, wherein the glass frit further comprises at least one of TiO₂, SnO, ZnO, CaO, MgO, BaO, NaF, CaF₂, AlF₃, Co₃O₄, NiO, Fe₂O₃ and MnO₂.

7. A cooking appliance comprising:
a cavity (11), a cooking room (12) being provided in the cavity;
a door (14) selectively opening or closing the cooking room (12); and
at least one heating source (13) providing heat for heating food cooked in the cooking room (12),
wherein
at least one of the cavity (11) and the door (14) comprises a parent metal material and a function layer on the parent metal material (14a, 11a), and a function layer (11b, 14b) on the parent metal material (14a, 11a), the function layer (11b, 14b) comprises a coating composition of at least one of claims 1 to 6.

8. The cooking appliance of claim 7, wherein the function layer is in direct physical contact with the parent metal material (11a, 14a).

9. The cooking appliance of claim 7, wherein at least one of the cavity (11) and the door (14) further comprises a buffer layer (11c, 14c) between the function layer (11b, 14b) and the parent metal material (11a, 14a).

10. The cooking appliance of claim 9, wherein the buffer layer (11c, 14c) includes an adhesive layer.

11. The cooking appliance of any one of claims 7, 8, 9 or 10, wherein the function layer (11b, 14b) is disposed on the surface of at least one of the cavity (11) and the door (14).

12. The cooking appliance of claim 7, 8, 9 or 10, wherein the function layer (11b, 14b) is disposed on the surface of the cavity (11) and the surface of the door (14).

## Patentansprüche

1. Beschichtung, umfassend:
eine Glasfritte; und
ein Material zur Verstärkung der elektrostatischen Kraft (200), umfassend Polymethylhydrogensiloxanderivate,
wobei die Glasfritte mit 99,6 Gew.-% bis 99,85 Gew.-% der Beschichtungszusammensetzung hinzugefügt wird und
das Material zur Verstärkung der elektrostatischen Kraft (200) mit 0,1 Gew.-% bis 0,3 Gew.-% der Beschichtungszusammensetzung hinzugefügt wird,
wobei das Material zur Verstärkung der elektrostatischen Kraft repräsentiert wird durch die nachstehende Formel: 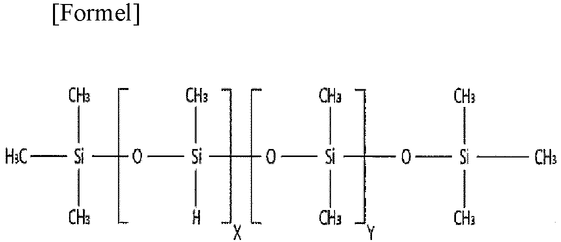 wobei 50 ≤ X ≤ 100 und 10 ≤ Y ≤ 50, und wobei X + Y innerhalb eines Bereichs von 100 ≤ X + Y ≤200 liegen.

2. Beschichtungszusammensetzung nach Anspruch 1, außerdem umfassend: ein Additiv, das mit der Glasfritte und den Polymethylhydrogensiloxanderivaten reagiert.

3. Beschichtungszusammensetzung nach Anspruch 2, wobei das Additiv Aminosilan umfasst.

4. Beschichtungszusammensetzung nach Anspruch 3, wobei das Aminosilan mit 0,05 Gew.-% bis 0,1 Gew.-% der Beschichtungszusammensetzung hinzugefügt wird.

5. Beschichtungszusammensetzung nach Anspruch 1, wobei die Glasfritte P₂O₅, SiO2, Oxid der Gruppe I, Al₂O₃, B₂O₃ und ZrO₂ umfasst.

6. Beschichtungszusammensetzung nach Anspruch 5, wobei die Glasfritte außerdem mindestens eines von TiO₂, SnO, ZnO, CaO, MgO, BaO, NaF, CaF₂, AlF₃, Co₃O₄, NiO, Fe₂O₃ und MnO₂ umfasst.

7. Kochgerät, umfassend:
einen Hohlraum (11), wobei in dem Hohlraum ein Garraum (12) bereitgestellt wird;
eine Tür (14), die den Garraum (12) selektiv öffnet oder schließt; und
mindestens eine Heizquelle (13), die Wärme zum Erwärmen von Lebensmitteln bereitstellt, die in der Küche (12) gekocht werden,
wobei
mindestens der Hohlraum (11) oder die Tür (14) ein Grundmetall und eine Funktionsschicht auf dem Grundmetallmaterial (14a, 11a), und eine Funktionsschicht (11b, 14b) auf dem Grundmetallmaterial (14a, 11a) umfasst, wobei die Funktionsschicht (11b, 14b) eine Beschichtungszusammensetzung nach mindestens einem der Ansprüche 1 bis 6 umfasst.

8. Kochgerät nach Anspruch 7, wobei die Funktionsschicht in direktem physikalischen Kontakt mit dem Grundmetallmaterial (11a, 14a) steht.

9. Kochgerät nach Anspruch 7, wobei mindestens der Hohlraum (11) oder die Tür (14) außerdem eine Pufferschicht (11c, 14c) zwischen der Funktionsschicht (11b, 14b) und dem Grundmetallmaterial (11a, 14a) umfasst.

10. Kochgerät nach Anspruch 9, wobei die Pufferschicht (11c, 14c) eine Klebeschicht beinhaltet.

11. Kochgerät nach einem der Ansprüche 7, 8, 9 oder 10, wobei die Funktionsschicht (11b, 14b) auf der Oberfläche von mindestens dem Hohlraum (11) oder der Tür (14) angeordnet ist.

12. Kochgerät nach Anspruch 7, 8, 9 oder 10, wobei die Funktionsschicht (11b, 14b) auf der Oberfläche des Hohlraums (11) und der Oberfläche der Tür (14) angeordnet ist.

## Revendications

1. Composition de revêtement comportant :
une fritte de verre ; et
un matériau de renfort contre les forces électrostatiques (200) incluant des dérivés de polyméthylhydrogénosiloxane,
dans laquelle la fritte de verre est ajoutée à raison de 99,6 % en poids à 99,85 % en poids de la composition de revêtement, et
le matériau de renfort contre les forces électrostatiques (200) est ajouté à raison de 0,1 % en poids à 0,3 % en poids de la composition de revêtement,
dans laquelle le matériau de renfort contre les forces électrostatiques est représenté par la formule ci-dessous : 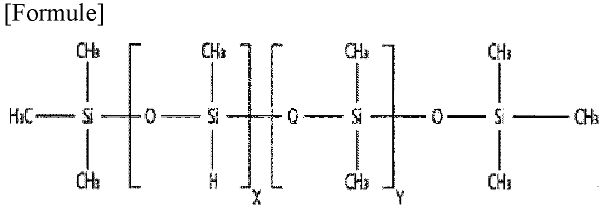 où 50 ≤ X ≤ 100 et 10 ≤ Y ≤ 50, et dans laquelle X+Y est dans une plage de 100 ≤ X+Y ≤ 200.

2. Composition de revêtement selon la revendication 1, comportant en outre : un additif réagissant avec la fritte de verre et les dérivés de polyméthylhydrogénosiloxane.

3. Composition de revêtement selon la revendication 2, dans laquelle l'additif comprend un amino silane.

4. Composition de revêtement selon la revendication 3, dans laquelle l'amino silane est ajouté à raison de 0,05 % en poids à 0,1 % en poids de la composition de revêtement.

5. Composition de revêtement selon la revendication 1, dans laquelle la fritte de verre comporte P₂O₅, SiO₂, un oxyde du groupe I, Al₂O₃, B₂O₃ et ZrO₂.

6. Composition de revêtement selon la revendication 5, dans laquelle la fritte de verre comporte en outre au moins un élément parmi TiO₂, SnO, ZnO, CaO, MgO, BaO, NaF, CaF₂, AlF₃, Co₃O₄, NiO, Fe₂O₃ et MnO₂.

7. Appareil de cuisson comportant :
une cavité (11), un espace de cuisson (12) étant prévu dans la cavité ;
une porte (14) ouvrant ou fermant sélectivement l'espace de cuisson (12) ; et
au moins une source de chauffage (13) fournissant de la chaleur pour chauffer des aliments cuits dans l'espace de cuisson (12),
dans lequel
au moins un élément parmi la cavité (11) et la porte (14) comporte un matériau métallique de base et une couche fonctionnelle sur le matériau métallique de base (14a, 11a) et une couche fonctionnelle (11b, 14b) sur le matériau métallique de base (14a, 11a), la couche fonctionnelle (11b, 14b) comportant une composition de revêtement selon au moins une des revendications 1 à 6.

8. Appareil de cuisson selon la revendication 7, dans lequel la couche fonctionnelle est en contact physique direct avec le matériau métallique de base (11a, 14a).

9. Appareil de cuisson selon la revendication 7, dans lequel au moins un élément parmi la cavité (11) et la porte (14) comporte en outre une couche tampon (11c, 14c) entre la couche fonctionnelle (11b, 14b) et le matériau métallique de base (11a, 14a).

10. Appareil de cuisson selon la revendication 9, dans lequel la couche tampon (11c, 14c) inclut une couche adhésive.

11. Appareil de cuisson selon l'une quelconque des revendications 7, 8, 9 ou 10, dans lequel la couche fonctionnelle (11b, 14b) est disposée sur la surface d'au moins un élément parmi la cavité (11) et la porte (14).

12. Appareil de cuisson selon la revendication 7, 8, 9 ou 10, dans lequel la couche fonctionnelle (11b, 14b) est disposée sur la surface de la cavité (11) et la surface de la porte (14).
